# EUROPEAN PATENT SPECIFICATION

(11) **EP 0 418 568 B1**
(45) Date of publication and mention of the grant of the patent: **20.12.1995**
(21) Application number: 90115923.6
(22) Date of filing: 20.08.1990
(51) Int. Cl.: C07F 7/21

(54) **Novel fluorinated cyclic organic silicon compounds and a method for making them**
Fluorierte zyklische Organosilicium-Verbindungen und Verfahren zu deren Herstellung
Composés organosiliciés fluorés cycliques, et procédé pour les préparer

(30) Priority: 21.08.1989 JP 214664/89
(43) Date of publication of application: 27.03.1991
(73) Proprietor: SHIN-ETSU CHEMICAL CO., LTD., Chiyoda-ku Tokyo (JP)
(72) Inventor: Kishita, Hirofumi, Annaka-shi, Gunma-ken (JP); Yamaguchi, Koichi, Takasaki-shi, Gunma-ken (JP); Takano, Kouji, Annaka-shi, Gunma-ken (JP); Takago, Toshio, Annaka-shi, Gunma-ken (JP)
(74) Representative: TER MEER STEINMEISTER & PARTNER GbR

(56) References cited:
- EP-A- 0 328 397
- DE-A- 3 830 572

## Description

This invention relates to novel fluorinated cyclic organic silicon compounds and a method for preparing the same. The fluorinated cyclic organic silicon compounds undergo ring-opening polymerization in the presence of an alkaline or acid catalyst through equilibration reaction, producing chain siloxane polymers which have heat resistance, chemical resistance, water and oil repellency, and mold releasability and are useful materials for preparing silicone fluids and elastomers.

### BACKGROUND OF THE INVENTION

A variety of silicone fluids and elastomers are known in the prior art and have been utilized in numerous applications. There still remains a need for organic silicon compounds from which siloxane polymers having heat resistance, chemical resistance, water and oil repellency, and mold releasability can be readily produced.

### SUMMARY OF THE INVENTION

The inventors have found that a novel fluorinated organic silicon compound which has been disclosed in the Co-pending application EP-A-0 414 186 and which has the general formula: 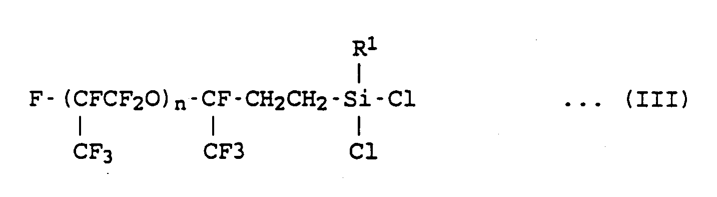
wherein R1 is an alkyl group having 1 to 6 carbon atoms and n is an integer of 1 to 6 is produced by reacting a chlorosilane of the general formula: 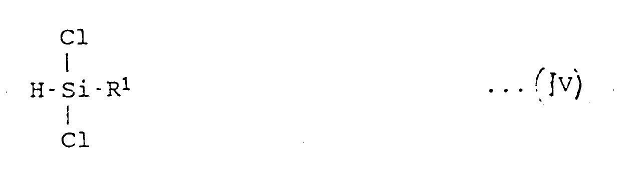
wherein R¹ is as defined above with a fluorinated olefin of the general formula: 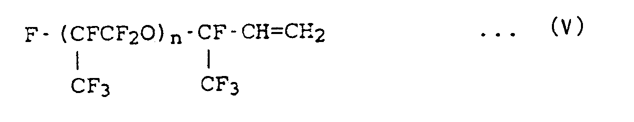
wherein n is as defined above in the presence of a platinum catalyst; and that a novel fluorinated cyclic organic silicon compound of the general formula: 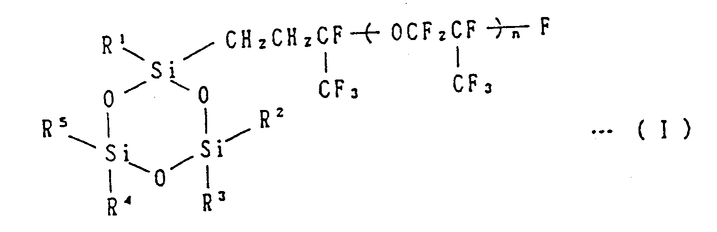
wherein R¹, R², R³, R⁴, and R⁵ are independently selected from alkyl groups having 1 to 6 carbon atoms and n is as defined above is produced by reacting the fluorinated organic silicon compound of formula (III) with a disiloxane diol of the general formula: 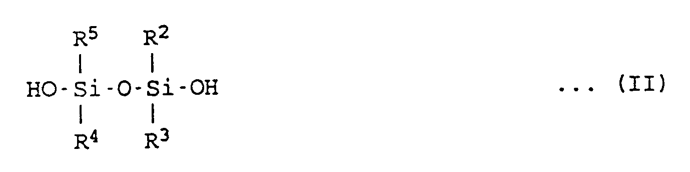
wherein R², R³, R⁴, and R⁵ are as defined above in the presence of a catalyst.

The fluorinated cyclic organic silicon compound of formula (I) readily undergoes ring-opening polymerization in the presence of an alkali or acid catalyst to produce a chain siloxane polymer which has excellent properties including heat resistance, chemical resistance, water and oil repellency, and mold releasability due to the presence of a substituent containing many fluorine atoms and is thus a useful starting material for silicone fluids and elastomers.

Briefly stated, the invention provides a fluorinated cyclic organic silicon compound of formula (I) as defined above and a method for preparing the compound of formula (I) by reacting a disiloxane diol of formula (II) with a fluorinated organic silicon compound of formula (III) both as defined above.

DE-A-38 30 572 describes dichlorosilanes according to the above formula (I). However, this document only states the structure of these compounds and the reaction by which they are produced, but does not contain any information which enables the skilled person to prepare the required intermediate of formula (III) which is used as a starting material.

### BRIEF DESCRIPTION OF THE DRAWINGS

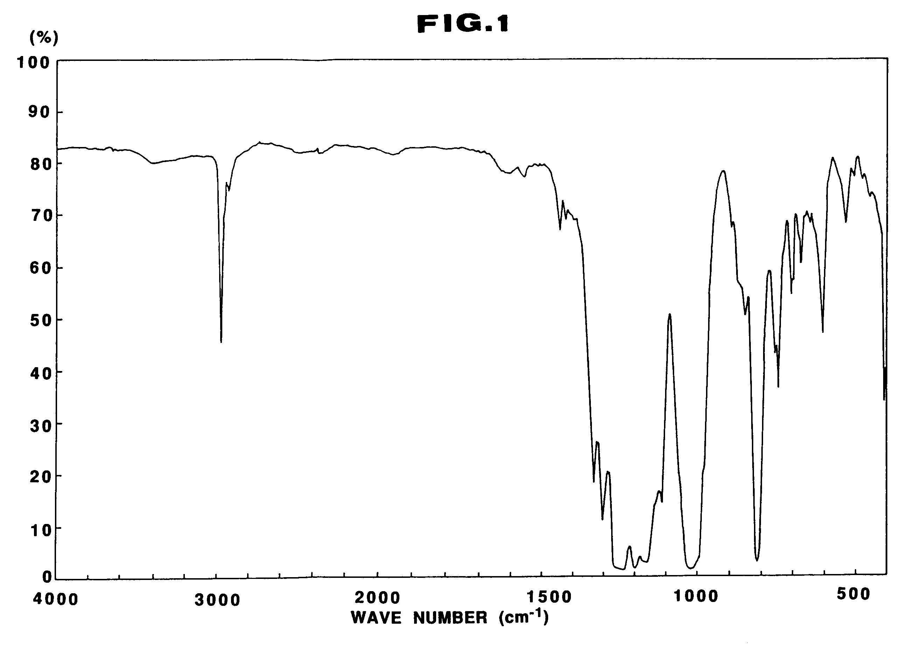

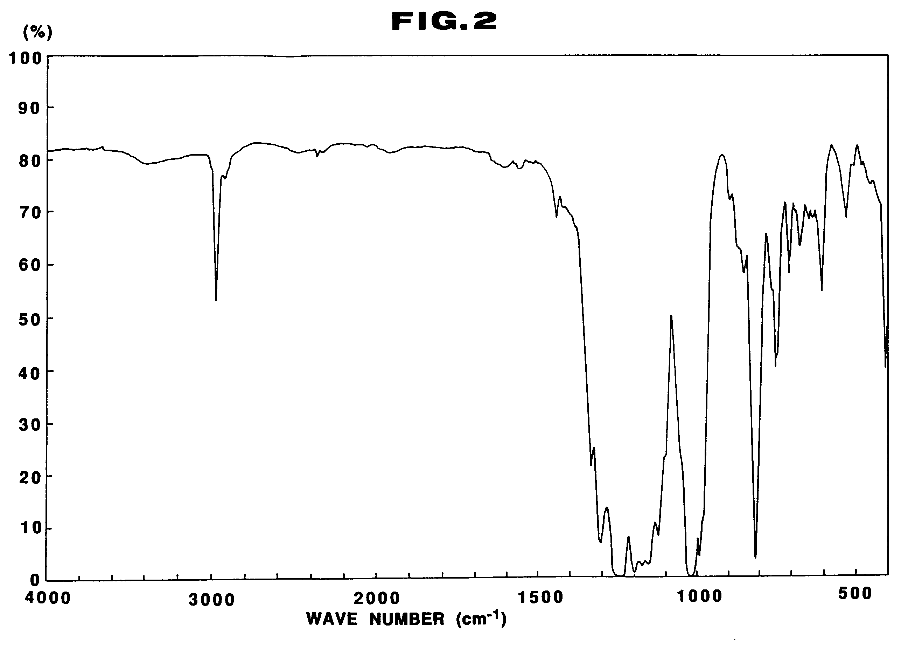

FIGS. 1 and 2 are charts showing infrared spectra of the end compounds obtained in Examples 1 and 2, respectively.

### DETAILED DESCRIPTION OF THE INVENTION

The fluorinated cyclic organic silicon compounds of the present invention are of the following general formula (I). 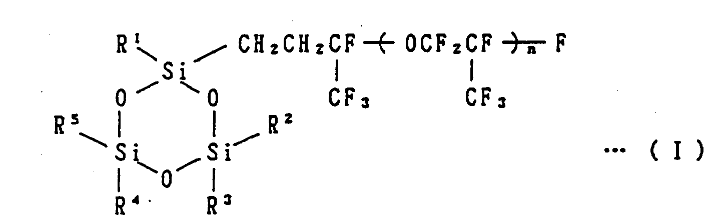
In the formula, R¹, R², R³, R⁴, and R⁵, which may be the same or different, are independently selected from alkyl groups having 1 to 6 carbon atoms, for example, such as methyl, ethyl, propyl, isopropyl and butyl groups. Letter n is an integer of from 1 to 6. With a proper choice of n to determine the size of a fluorinated substituent, the resultant siloxane polymer can have a controlled profile of properties including heat resistance, chemical resistance, weatherability, water and oil repellency, and mold releasability for a particular application.

The fluorinated cyclic organic silicon compounds of formula (I) may be synthesized by the following scheme. 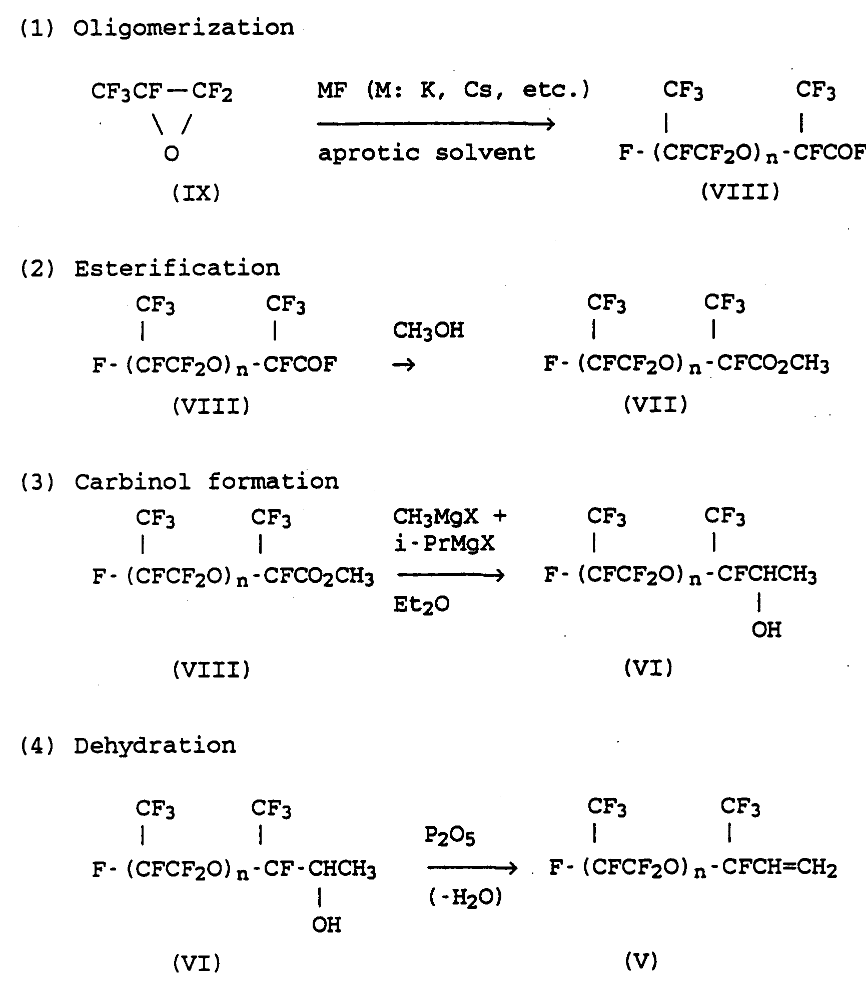 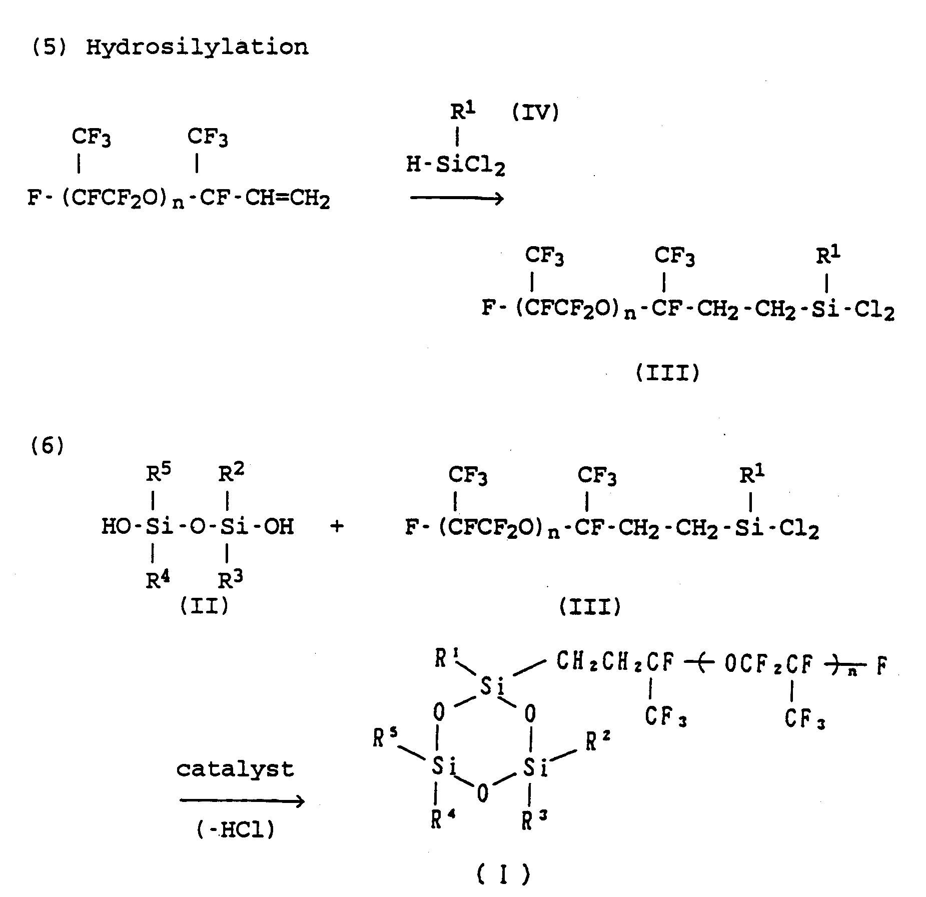
Oligomerization (1) may be carried out by any well-known method. For example, by blowing hexafluoropropenoxide (HFPO) of formula (IX) in an aprotic solvent system containing a metal fluoride such as potassium fluoride (KF), cesium fluoride (CsF) or the like at low temperatures of from -10°C to 80°C, there is obtained an HFPO oligomeric acid fluoride of formula (VIII). The aprotic solvents used herein include diglyme, tetraglyme, acetonitrile, and dioxane.

Esterification reaction (2) is instantaneously completed by adding dropwise the separated oligomeric acid fluoride to excess methanol with cooling at 0°C to 30°C. Purification and isolation is done by pouring the reaction mixture into an excessively large volume of water followed by decantation, neutralization, water washing and distillation. Alternatively, each of the ester oligomers of formula (VII) may be isolated by fractionation after the HFPO oligomeric acid fluoride is poured into excess alcohol for esterification.

Carbinol formation (3) may be effected by dissolving the ester of formula (VII) in a solvent such as ethyl ether, adding a Grignard reagent in the form of a mixture of methyl and isopropyl magnesium halides, and heating the reaction mixture. For example, an ether solution of the ester is added dropwise to a Grignard reagent at 0 to 5°C and the reaction mixture is then stirred for one day at room temperature. The isopropyl Grignard reagent acts as a reducing agent.

Dehydration (4) is effected at a temperature of 300 to 400°C in the presence of phosphorus pentoxide, resulting in a fluorinated olefin of formula (IV).

Hydrosilylation (5) is effected by reacting the fluorinated olefin of formula (V) with a dichlorosilane of formula (IV) in the presence of a platinum catalyst, obtaining a novel fluorinated organic silicon compound of formula (III). Preferably, the dichlorosilane and the fluorinated olefin are used in such amounts that 1 to 2 mol, more preferably 1.1 to 1.3 mol of the dichlorosilane is present per mol of the fluorinated olefin. The platinum catalyst is used in a catalytic amount which preferably ranges from 1x10⁻⁶ to 1x10⁻³ mol, especially 1x10⁻⁵ to 1x10⁻⁴ mol of platinum per mol of the fluorinated olefin. The typical platinum catalysts used herein are platinum group metal catalysts, for example, chloroplatinic acid, alcohol modified chloroplatinic acids as disclosed in U.S. Patent No. 3,220,972, chloroplatinic acid-olefin complexes as disclosed in U.S. Patent Nos. 3,159,601, 3,159,662 and 3,775,452, platinum black and palladium on alumina, silica and carbon supports, and rhodium-olefin complexes. The reaction conditions may be suitably adjusted although preferred conditions include a reaction temperature of 50 to 150°C, especially 70 to 110°C and a reaction time of about 1 to about 100 hours, especially about 5 to about 20 hours.

The final reaction (6) is effected in a solvent in the presence of a catalyst, obtaining a fluorinated cyclic organic silicon compound of formula (I). The catalysts used herein include amines such as triethylamine, pyridine, dimethylaniline, and diethylamine and ureas. They are preferably used in amounts of 1 to 6 mol, especially 2 to 3 mol per mol of the fluorinated dichlorosilane. The reaction temperature preferably ranges from 0 to 100°C, especially 30 to 70°C.

The reaction may be carried out by separately preparing solutions of the compounds of formulae (II) and (III) and adding them to a solution containing the catalyst. The molar ratio of formula (II) compound to formula (III) compound preferably ranges from 2:1 to 1:2, more preferably from 1:1 to 1:1.3. The preferred solvent for the disiloxane diol of formula (II) is a polar solvent such as methyl ethyl ketone, acetone, and ethyl acetate whereas the solvent for the dichlorosilane having a fluorinated substituent of formula (III) is a fluorinated solvent such as xylene hexafluoride, perfluorooctane, and 1,1,2-trichlorotrifluoroethane.

The novel fluorinated cyclic organic silicon compounds of formula (I) are useful starting materials for preparing silicone fluids and elastomers. For instance, they are likely to undergo ring-opening polymerization in the presence of an alkali catalyst such as KOH and (n-C₄H₉)₄POH or acid catalyst such as H₂SO₄ and CF₃SO₃H by way of equilibration reaction as known for the conventional hexamethylcyclotrisiloxane, to thereby produce chain siloxane polymers. These chain siloxane polymers are useful starting materials for preparing silicone fluids and elastomers. Since the organic silicon compounds of the invention have a substituent containing many fluorine atoms in their molecule, they polymerize into siloxane polymers which not only have improved heat resistance, chemical resistance and weatherability, but also exhibit higher water and oil repellency and mold releasability than conventional ones because of reduced polymer surface energy.

There have been described novel fluorinated cyclic organic silicon compounds of formula (I) which are likely to ring-opening polymerization to produce chain siloxane polymers which have heat resistance, chemical resistance, weatherability, water and oil repellency, and mold releasability due to the presence of a fluorinated substituent and can be controlled to a desired profile of such properties for a particular application by selecting the size of a fluorinated substituent. Therefore, the fluorinated cyclic organic silicon compounds and siloxane polymers resulting therefrom are useful in preparing silicone fluids and elastomers.

### EXAMPLE

Examples of the present invention are given below by way of illustration and not by way of limitation. Unless otherwise stated, parts and percents are by weight.

### Example 1

A 350-ml autoclave was charged with 105 grams of dichloromethylsilane and 36 grams of a fluorinated olefin of the following formula (Va) and further with 0.05 grams of a platinum catalyst. 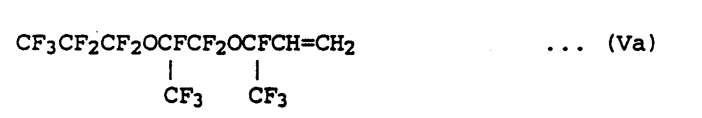
The autoclave was then heated to 120°C and kept at the temperature for 50 hours for reaction. Distillation of the reaction mixture yielded 76 grams (yield 60%) of a fraction having a boiling point of 76°C/8 mmHg.

The fraction was identified to be an organic silicon compound of the following formula: 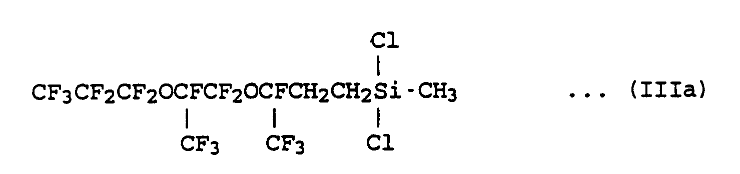
through measurement of infrared (IR) absorption spectrum and nuclear magnetic resonance (NMR) spectrum as reported below.
IR spectrum:
2950 cm⁻¹ (C-H)
1100-1340 cm⁻¹ (C-F)
¹H-NMR spectrum:
(solvent: CCl₄, internal standard: CHCl₃)
0.9 (s, 3H, Si-CH₃)
1.1-1.6 (m, 2H, Si-CH₂-C)
2.1-2.7 (m, 2H, Si-C-CH₂-C)

Next, a four-necked flask having an interior volume of 2 liters was charged with 600 ml of metaxylene hexafluoride in which 44 grams of triethylamine was dissolved. The flask was equipped with two dropping funnels each having an interior volume of 500 ml. One funnel was charged with 198 grams of the fluorinated dichlorosilane of formula (IIIa) prepared above in 150 ml of metaxylene hexafluoride whereas the other funnel charged with 55 grams of a disiloxane diol of the formula: 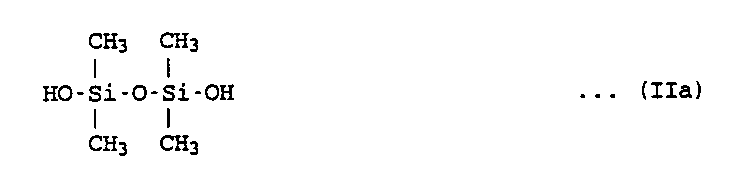
in 150 ml of methyl ethyl ketone. After the triethylamine solution in the flask was heated to 50°C, the dichlorosilane and disiloxane diol solutions were added dropwise from the respective funnels at an approximately equal rate of about 1 ml/min. After dropwise addition, the reaction mixture was stirred for 30 minutes to complete reaction. The reaction product was washed with water to remove the triethylamine hydrochloride by-product and the separated organic layer was distilled in vacuum, obtaining 188 grams (yield 82%) of a fraction having a boiling point of 77°C/2 mmHg.

The compound was subjected to elemental analysis and measured for IR and NMR spectra, with the following results.

| Elemental analysis: C₁₅H₁₉O₅F₁₇Si₃ | | | | |
|---|---|---|---|---|
| | C | H | Si | F |
| Calcd. (%) | 26.24 | 2.77 | 12.24 | 47.08 |
| Found (%) | 26.27 | 2.81 | 12.21 | 47.11 |

IR spectrum: see FIG. 1.
specific absorption
1020 cm⁻¹ (Si-O)
1000-1400 cm⁻¹ (C-F)
NMR spectrum: δ (ppm)
(solvent: Fron 113, internal standard: CHCl₃)
0.40-0.88 (m, 2H, Si-CH₂-C)
1.72-2.45 (m, 2H, CF-CH₂-C)

Based on these results, the compound was identified to be a fluorinated cyclic organic silicon compound of the following formula.

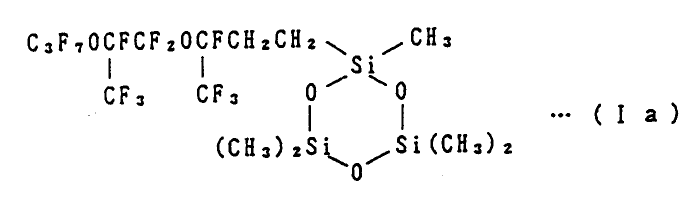

### Example 2

A four-necked flask having an interior volume of 2 liters was charged with 500 ml of metaxylene hexafluoride in which 33 grams of triethylamine was dissolved. The flask was equipped with two dropping funnels each having an interior volume of 300 ml. One funnel was charged with 190 grams of a dichlorosilane having a fluorinated substituent of the formula: 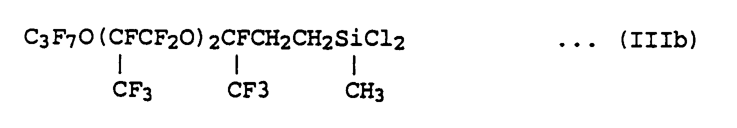
in 100 ml of metaxylene hexafluoride whereas the other funnel charged with 42 grams of the same disiloxane diol as used in Example 1 in 150 ml of methyl ethyl ketone. After the triethylamine solution in the flask was heated to 50°C, the dichlorosilane and disiloxane diol solutions were added dropwise from the respective funnels at an approximately equal rate of about 1 ml/min. After dropwise addition, the reaction mixture was stirred for 30 minutes to complete reaction. The reaction product was washed with water to remove the triethylamine hydrochloride by-product and the separated organic layer was distilled in vacuum, obtaining 268 grams (yield 86%) of a fraction having a boiling point of 110°C/3 mmHg.

The compound was subjected to elemental analysis and measured for IR and NMR spectra, with the following results.

| Elemental analysis: C₁₈H₁₉O₆F₂₃Si₃ | | | | |
|---|---|---|---|---|
| | C | H | Si | F |
| Calcd. (%) | 25.35 | 2.23 | 9.86 | 51.29 |
| Found (%) | 25.32 | 2.20 | 9.84 | 51.31 |

IR spectrum: see FIG. 2.
specific absorption
1020 cm⁻¹ (Si-O)
1000-1400 cm⁻¹ (C-F)
NMR spectrum: δ (ppm)
(solvent: Fron 113, internal standard: CHCl₃)
0.40-0.97 (m, 2H, Si-CH₂-C)
1.73-2.43 (m, 2H, CF-CH₂-C)
Based on these results, the compound was identified to be a fluorinated cyclic organic silicon compound of the following formula.

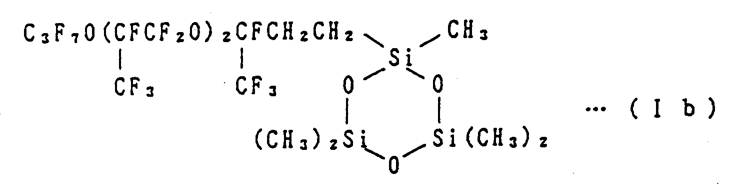

Although some preferred embodiments have been described, many modifications and variations may be made thereto in the light of the above teachings. It is therefore to be understood that within the scope of the appended claims, the invention may be practiced otherwise than as specifically described.

## Claims

1. A fluorinated cyclic organic silicon compound of the general formula: 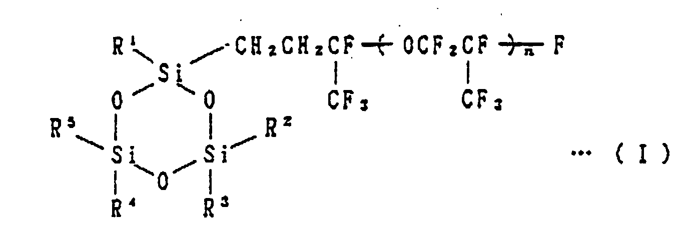 wherein R¹, R², R³, R⁴, and R⁵ are independently selected from alkyl groups having 1 to 6 carbon atoms and n is an integer of from 1 to 6.

2. A method for preparing a fluorinated cyclic organic silicon compound of the general formula: 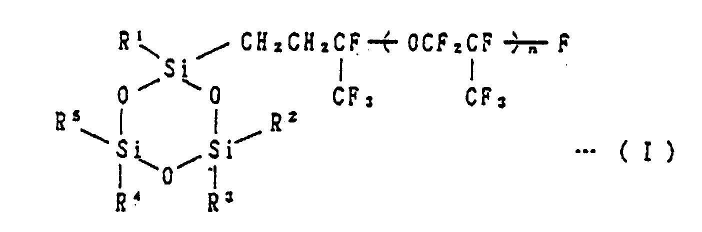 wherein R¹, R², R³, R⁴, and R⁵ are independently selected from alkyl groups having 1 to 6 carbon atoms and n is an integer of from 1 to 6, said method comprising the step of reacting a disiloxane diol of the general formula: 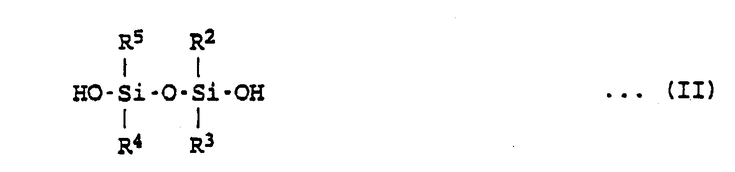 wherein R², R³, R⁴, and R⁵ are as defined above with a fluorinated organic silicon compound of the general formula: 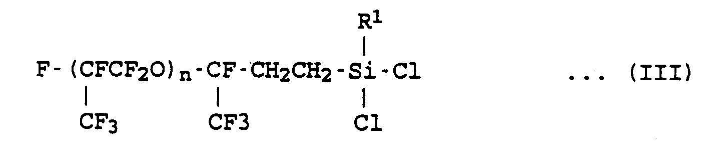 wherein R¹ and n are as defined above in the presence of a catalyst.

3. The method of claim 2 wherein the catalyst is an amine catalyst.

## Patentansprüche

1. Fluorierte cyclische organische Siliciumverbindung der allgemeinen Formel: 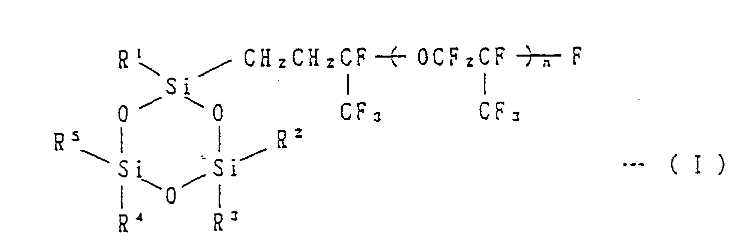 worin R¹, R², R³, R⁴ und R⁵ unabhängig voneinander aus Alkylgruppen mit 1 bis 6 Kohlenstoffatomen gewählt werden und n eine ganze Zahl von 1 bis 6 ist.

2. Verfahren zur Herstellung einer fluorierten cyclischen organischen Siliciumverbindung der allgemeinen Formel: 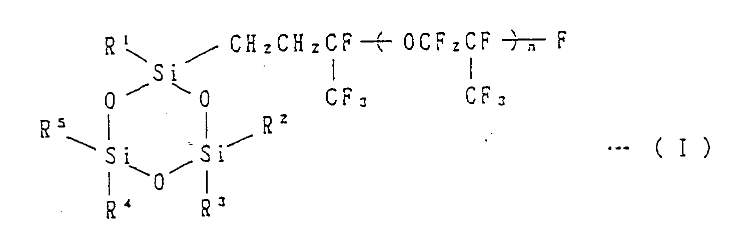 worin R¹, R², R³, R⁴ und R⁵ unabhängig voneinander aus Alkylgruppen mit 1 bis 6 Kohlenstoffatomen gewählt werden und n eine ganze Zahl von 1 bis 6 ist, wobei das Verfahren den Schritt des Umsetzens eines Disiloxandiols der allgemeinen Formel: 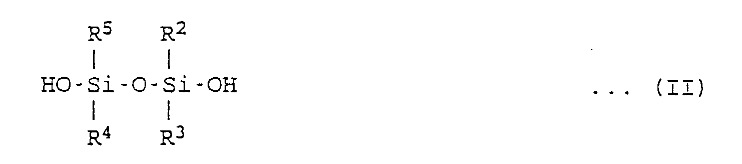 worin R², R³, R⁴ und R⁵ wie oben definiert sind, mit einer fluorierten organischen Siliciumverbindung der allgemeinen Formel: 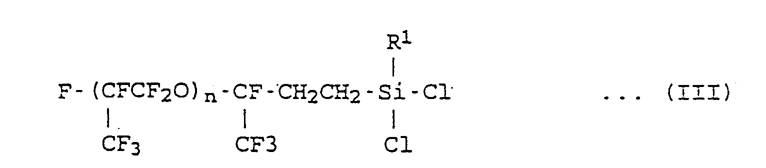 worin R¹ und n wie oben definiert sind, in Gegenwart eines Katalysators umfaßt.

3. Verfahren nach Anspruch 2, wobei der Katalysator ein Aminkatalysator ist.

## Revendications

1. Un composé organosilicié cyclique fluoré de la formule générale : 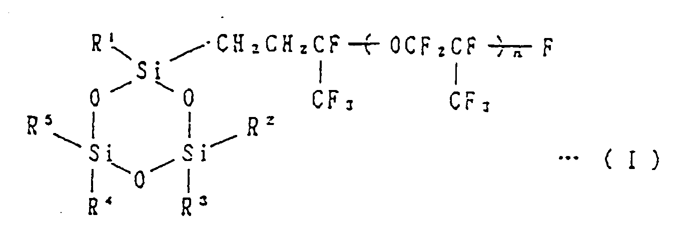 dans laquelle R¹, R², R³, R⁴ et R⁵ sont choisis indépendamment parmi les groupes alkyle ayant 1 à 6 atomes de carbone et n est un nombre entier de 1 à 6.

2. Un procédé pour préparer un composé organosilicié cyclique fluoré de la formule générale : 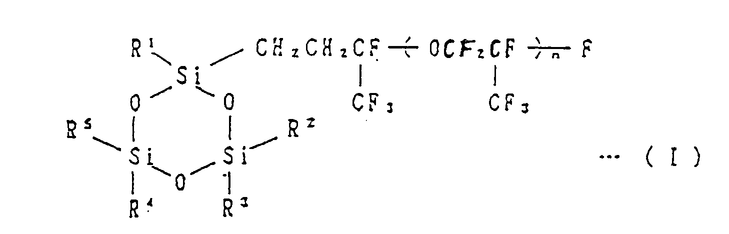 dans laquelle R¹, R², R³, R⁴ et R⁵ sont choisis indépendamment parmi les groupes alkyle ayant 1 à 6 atomes de carbone et n est un nombre entier de 1 à 6, ledit procédé comprenant l'étape de réaction d'un disiloxane-diol de la formule générale : 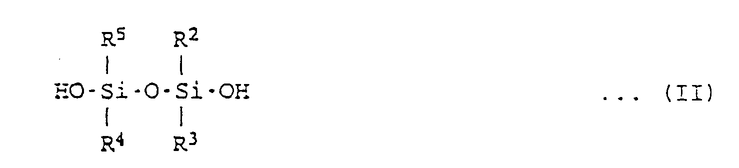 dans laquelle R², R³, R⁴ et R⁵ sont tels que définis ci-dessus, avec un composé organosilicié fluoré de la formule générale : 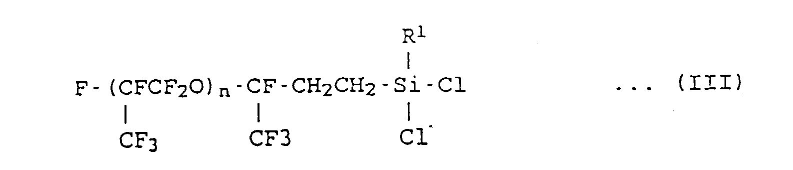 dans laquelle R¹ et n sont tels que définis ci-dessus, en présence d'un catalyseur.

3. Le procédé de la revendication 2, dans lequel le catalyseur est un catalyseur aminé.
